(19) Europäisches Patentamt / European Patent Office / Office européen des brevets

(11) **EP 3 215 791 B1**

(12) **EUROPÄISCHE PATENTSCHRIFT**

(45) Veröffentlichungstag und Bekanntmachung des Hinweises auf die Patenterteilung:
**26.02.2025   Patentblatt 2025/09**

(21) Anmeldenummer: **15793688.1**

(22) Anmeldetag: **29.10.2015**

(51) Internationale Patentklassifikation (IPC):
*F21V 8/00* (2006.01)     *B60Q 1/38* (2006.01)
*F21S 41/14* (2018.01)     *F21S 41/43* (2018.01)
*F21S 41/24* (2018.01)     *F21S 43/237* (2018.01)
*F21S 43/239* (2018.01)     *F21S 43/245* (2018.01)
*F21S 43/251* (2018.01)     *F21Y 115/10* (2016.01)

(52) Gemeinsame Patentklassifikation (CPC):
**F21S 41/24; B60Q 1/381; F21S 41/14; F21S 41/43; F21S 43/14; F21S 43/237; F21S 43/239; F21S 43/245; F21S 43/251; G02B 6/0028;** F21Y 2115/10; G02B 6/001; G02B 6/0048

(86) Internationale Anmeldenummer:
**PCT/AT2015/050271**

(87) Internationale Veröffentlichungsnummer:
**WO 2016/070210 (12.05.2016 Gazette 2016/19)**

(54) **KRAFTFAHRZEUG AUFWEISEND EINEN KRAFTFAHRZEUGSCHEINWERFER MIT EINEM LICHTSYSTEM**

MOTOR VEHICLE COMPRISING A MOTOR VEHICLE HEADLIGHT WITH A LIGHT SYSTEM

VÉHICULE AUTOMOBILE COMPRENANT UN PHARE DE VÉHICULE AUTOMOBILE AVEC UN SYSTÈME D'ÉCLAIRAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.11.2014   AT 507932014**

(43) Veröffentlichungstag der Anmeldung:
**13.09.2017   Patentblatt 2017/37**

(73) Patentinhaber: **ZKW Group GmbH
3250 Wieselburg (AT)**

(72) Erfinder:
- **FAFFELBERGER, Anton
  3375 Krummnussbaum (AT)**
- **LEBER, Laura
  3362 Mauer b. Amstetten (AT)**

(74) Vertreter: **Patentanwaltskanzlei
Matschnig & Forsthuber OG
Biberstraße 22
Postfach 36
1010 Wien (AT)**

(56) Entgegenhaltungen:
WO-A2-2013/120124     DE-A1- 102014 205 996
US-A- 4 208 363     US-A- 5 001 306

**Beschreibung**

Die Erfindung betrifft ein Kraftfahrzeug mit einem Kraftfahrzeugscheinwerfer mit einem Lichtsystem, umfassend zumindest zwei Lichtquellen, zumindest zwei Lichtleiter, zumindest ein nachgeschaltetes lichtdurchlässiges Abstrahlelement und zumindest eine Steuereinheit zum zeitlich versetzten Ansteuern der zumindest zwei Lichtquellen, wobei die zumindest zwei Lichtquellen dazu eingerichtet sind, Licht in jeweils einen Lichtleiter einzukoppeln, wobei die Lichtleiter jeweils zumindest einen Lichtauskopplungsabschnitt aufweisen, der dazu eingerichtet ist, Licht in einen Lichteinkopplungsabschnitt des Abstrahlelements einzukoppeln. Dabei ist jeder Lichtquelle vorzugsweise jeweils ein Lichtleiter zugeordnet.

Aus dem Stand der Technik sind Lichtsysteme bekannt, in denen einzelne Lichtquellen unabhängig voneinander gesteuert werden können, wobei das von den einzelnen Lichtquellen emittierte Licht durch nebeneinander angeordnete Lichtleiter abgestrahlt bzw. in eine gewünschte Richtung gelenkt wird. Dabei werden die Lichtquellen dergestalt angesteuert, dass der zeitliche Verlauf der durch die Lichtquellen abgestrahlte Lichtmenge so gewählt ist, dass der Eindruck eines bewegten Lichtbildes bzw. einer Lichtverteilung (bzw. eines Erscheinungsbildes), eines sogenannten Lauflichtes gewonnen wird und dadurch ein Lauflichteffekt erzielt werden kann. Eine solches Lichtsystem bzw. ein hierfür geeignetes Verfahren ist zum Beispiel aus der WO 2013/120124 A2 bekannt geworden. Darin strahlen Lichtleiter in eine gemeinsame Abstrahlrichtung bzw. koppeln Licht in diese Richtung aus, wobei einzelne Lichtleiter normal zur Abstrahlrichtung zueinander versetzt sind. Durch den Versatz zwischen den Lichtleitern entstehen dunkle, weniger intensiv ausgeleuchtete Bereiche im Lichtbild eines solchen Lichtsystems, wodurch der Eindruck eines fließenden Übergangs zwischen den durch die Lichtleiter abgestrahlten Lichtstrahlen beeinträchtigt wird, da die einzelnen Lichtleiter als solche erkennbar sind. Dokument DE 1012014205996 A1 zeigt einen Fahrtrichtungsanzeiger. Dokument US 4208363 zeigt ein Verfahren zur Herstellung aneinander liegender Lichtführungen. Dokument US 5001306 zeigt eine optische Vorrichtung umfassend eine Anzahl an Lichtfasern.

WO 2013120124A2 zeigt eine Lichtleiterstruktur. Dokument US 5184883 zeigt ein Beleuchtungssystem umfassend Lichtführungen und Lichtquellen.

Es ist daher eine Aufgabe der Erfindung ein Kraftfahrzeug mit einem Lichtsystem zu schaffen, welches kostengünstig und einfach herstellbar ist, eine hohe mechanische Belastbarkeit aufweist und ein gegenüber dem Stand der Technik verbessertes, durchgehend homogenes Lichtbild liefert.

Diese Aufgabe wird in einem ersten Aspekt der Erfindung mit einem Kraftfahrzeug aufweisend ein Lichtsystem gemäß Anspruch 1 gelöst.

Dadurch ist es möglich, die Lichtleiter nahe aneinander zu führen und das von den einzelnen Lichtleitern abgestrahlte Licht über das Abstrahlelement abzustrahlen. Vorzugsweise können die Lichtleiter in einem konstanten Abstand hinter dem Abstrahlelement platziert werden, ohne dass die Lichtleiter dabei entlang ihrer Längserstreckung stark gekrümmt werden müssen. Jeder Lichtleiter weist dabei einen Lichtauskopplungsabschnitt auf, der einem Bereich des Lichteinkopplungsabschnitts des Abstrahlelements zugeordnet ist. Dadurch kann ein äußert robuster und kompakter Aufbau eines Lichtsystems erreicht werden, das besonders gut für die Erzeugung eines Lauflichtes geeignet ist, indem ein gleichmäßiger Übergang zwischen dem mittels der Lichtleiter erzeugten Lichtbilder ermöglicht wird, sodass Designs erzielt werden können, die mit einem einzigen Lichtleiter nicht umsetzbar ist. So ist es z.B. möglich, die Lichtleiter in einer Ebene anzuordnen, die parallel zur Abstrahlrichtung der Lichtleiter orientiert ist, sodass einzelne Lichtleiter entgegen der Abstrahlrichtung hintereinander angeordnet werden können. Der Lichteinkopplungsabschnitt sowie eine Lichtaustrittsfläche des Abstrahlelements können jeweils einen gestuften Verlauf aufweisen, sodass ein seitlicher Versatz einzelner Lichtstrahlen vorgebeugt wird.

Unter dem Ausdruck "zeitlich versetztes Ansteuern" wird eine Steuerung oder Regelung verstanden, die in der Lage ist, einzelne Lichtquellen mit voneinander unterschiedlichen Signalen zu beaufschlagen. Die Signale können dabei abgesehen von einem zeitlichen Versatz den gleichen Verlauf aufweisen oder auch völlig unterschiedlich sein. Beispiele möglicher Ansteuersignale und daraus resultierender Lichtbilder bzw. Lichtintensitäten einzelner Lichtquellen können der WO 2013/120124 A2 entnommen werden. Unter einem Lichtleiter ist im Sinne der vorliegenden Erfindung eine Struktur zu verstehen, in der einfallendes Licht entlang der Erstreckung des Lichtleiters durch Totalreflexion an den Wänden reflektiert wird. Ein solcher Lichtleiter kann als Vollkörper ausgeführt sein. In diesem Zusammenhang ist es bevorzugt, dass der Lichtleiter aus einem transparenten farblosen Kunststoff gefertigt ist. Alternativ kann dieser aus Glas oder auch aus einem beliebigen anderen Material, beispielsweise Silikon, hergestellt sein, das zur Lichtleitung geeignet ist. Das Abstrahlelement kann ebenso als Vollkörper ausgebildet sein und z.B. aus Kunststoff, Glas, Silikon oder einem beliebigen anderen Material hergestellt sein, das zur Lichtleitung geeignet ist. Als Lichtquellen sind vorzugsweise LEDs geeignet. Alternativ dazu können auch beliebige andere dem Fachmann bekannte Lichtquellen wie Glühlampen, Xenonlampen etc. herangezogen werden.

Dabei kann es günstig sein, wenn die Lichtleiter zwei gerade Schenkel aufweisen, die mittels eines gekrümmten Abschnittes miteinander in Verbindung stehen, wobei die geraden Schenkel zueinander einen Winkel von zumindest 60° einschließen. Dadurch wird ein besonders kompakter Aufbau des erfindungsgemäßen Lichtsystems ermöglicht.

Die Lichtleiter sind als Leuchtstäbe ausgebildet. Leuchtstäbe weisen gute Lichtführungseigenschaften bei einem geringen Platzbedarf und guter mechanischer Belastbarkeit auf und sind daher besonders gut als Lichtleiter geeignet. Der Durchmesser der Leuchtstäbe kann vorzugsweise zwischen 6 mm und 10 mm betragen. Die Leuchtstäbe weisen im Lichtauskopplungsabschnitt optisch wirksame Störstellen auf, die dazu eingerichtet sind, Licht, das sich entlang des Leuchtstabes ausbreitet, dergestalt abzulenken, dass dieses aus dem Leuchtstab durch den Lichtauskopplungsabschnitt austritt und in den Lichteinkopplungsabschnitt des Abstrahlelements eintritt. Die Störstellen können vorzugsweise als Prismen oder prismenähnliche Vorsprünge/Vertiefungen innerhalb des Leuchtstabes ausgebildet sein.

Um einen besonders einfachen und robusten Aufbau der Erfindung zu erhalten, ist es vorgesehen, dass das Abstrahlelement einstückig ausgeführt ist.

Zudem ist es vorgesehen, dass das Abstrahlelement eine kontinuierliche Lichtaustrittsfläche aufweist. Unter einer kontinuierlichen Lichtaustrittsfläche wird eine Lichtaustrittsfläche verstanden, die durch Kanten begrenzt wird, die abgesehen von den Eckpunkten, einen stetigen Verlauf aufweisen.

Ein besonders kompakter Aufbau der Erfindung kann erzielt werden, wenn die Anzahl der Lichtleiter die Anzahl der Stufen um den Wert eins übersteigt. Einer Anzahl von n Stufen sind daher n+1 Lichtleiter zugeordnet.

Dabei ist es günstig, wenn zumindest drei Lichtleiter vorgesehen sind, wodurch ein besonders gut aufgelöstes Lichtbild erzielt werden kann. Die Anzahl der Lichtleiter oder Stufen kann genau oder zumindest drei, vier, fünf, sechs oder mehr betragen.

Um über ausreichenden Abstand zwischen den Lichtleitern zu verfügen und gleichzeitig die Lichtauskoppelflächen der Lichtleiter möglichst nahe an die Lichteinkopplungsflächen des Abstrahlelements heran zu führen, kann es vorgesehen sein, dass die Höhe h jeder Stufe größer ist als der Durchmesser eines korrespondierenden Lichtleiters.

Vorzugweise können die einzelnen Lichtleiter zumindest abschnittsweise im Wesentlichen parallel zueinander verlaufen. Dadurch ist ein besonders kompakter Aufbau des Lichtsystems möglich. Unter dem Ausdruck "im Wesentlichen parallel" wird dabei eine Ausrichtung der Lichtleiter verstanden, die Maximal um einen Winkel von 5° voneinander abweicht. Vorzugsweise beträgt die Abweichung der Ausrichtung einzelner Lichtleiter zueinander maximal einen Winkel von 1°.

Um unerwünschte Lichtkopplungen zwischen den einzelnen Lichtleitern vorzubeugen, kann es vorgesehen sein, dass zwischen den Lichtleitern Blendenelemente angeordnet sind.

Zudem können einzelne Lichtleiter zumindest 1mm zueinander beabstandet sein, um eine gewisse Bewegungsfreiheit zueinander zu erlauben. Damit können durch Vibrationen verursachte Bewegungen abgefedert werden, ohne dass die Lichtleiter aneinander scheuern und dadurch ihre Oberfläche beschädigt würde. Auch Ungenauigkeiten, die auf Fertigungstoleranzen zurückzuführen sind, können damit ausgeglichen werden.

In analoger Weise kann es vorgesehen sein, dass der Lichtauskopplungsabschnitt des Lichtleiters zumindest 1mm von dem Lichteinkopplungsabschnitt des Abstrahlelements beabstandet ist.

In einem weiteren Aspekt betrifft die Erfindung ein Kraftfahrzeug sowie einen Kraftfahrzeugscheinwerfer mit einem erfindungsgemäßen Lichtsystem.

Die Erfindung ist im Folgenden an Hand mehrerer beispielhaften und nicht einschränkenden Ausführungsformen näher erläutert, die in den Figuren veranschaulicht sind. Es zeigen

Fig. 1 eine schematische Darstellung eines Lichtsystems gemäß dem Stand der Technik,

Fig. 2 eine schematische Darstellung einer Ausführungsform eines Lichtsystems gemäß der Erfindung,

Fig. 3 eine perspektivische Darstellung der Lichtleiter sowie des Abstrahlelements gemäß Fig. 2,

Fig. 4 eine detaillierte Darstellung einzelner Komponenten des Lichtsystems gemäß Fig. 3,

Fig. 5 eine weitere perspektivische Darstellung auf einen Ausschnitt einzelner Komponenten des Lichtsystems gemäß Fig. 4,

Fig. 6 in einer Detaildarstellung der Fig. 5 einen beispielhaften Verlauf eines durch den Lichtleiter 11b ein das Abstrahlelement 10 eingekoppelten und von diesem abgestrahlten Lichtstrahls a und

Fig. 6a eine vereinfachte Darstellung des Übergangs des Lichtstrahls a von dem Lichtleiter 11b in das Abstrahlelement 10.

Im Folgenden bezeichnen - sofern nicht anders angegeben - gleiche Bezugzeichen die gleichen Merkmale.

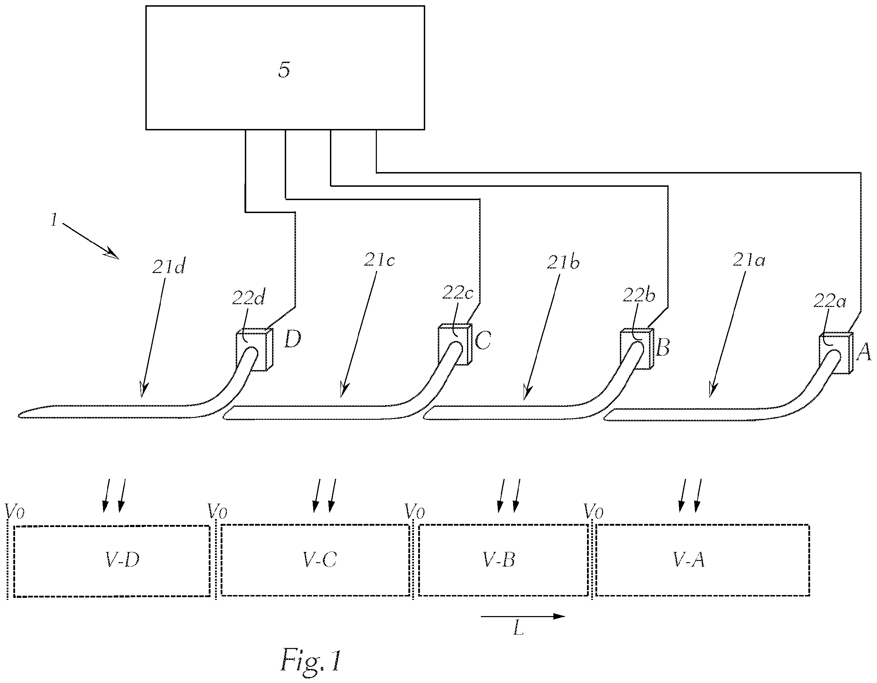

Figur 1 zeigt eine schematische Darstellung eines Lichtsystems 1 gemäß dem Stand der Technik. Darin ist eine Steuereinheit 5 erkennbar, die mit den Lichtquellen 22a bis 22d verbunden ist. Die Lichtquellen 22a bis 22d koppeln Licht in nachgeschaltete Lichtleiter 21a bis 21d, die wiederum Licht in die durch Pfeile dargestellte Richtung V nach vorne abstrahlen/ auskoppeln. Durch den konstruktiven Aufbau des Lichtsystems gemäß dem Stand der Technik, insbesondere durch die Beabstandung der Lichtleiter 21a bis 21d zueinander, entstehen zwischen Lichtbildern V-A bis V-D, die den jeweiligen Lichtleitern 21a bis 21d zugeordnet sind, dunkle Bereiche V0, die zwischen den hell ausgeleuchteten Bereichen V-A bis V-D zu liegen kommen und einen durch die Steuereinheit 5 angesteuerten Lauflichteffekt in seiner Qualität beeinträchtigen bzw. kein durchgehendes homogenes Lichtbild liefern.

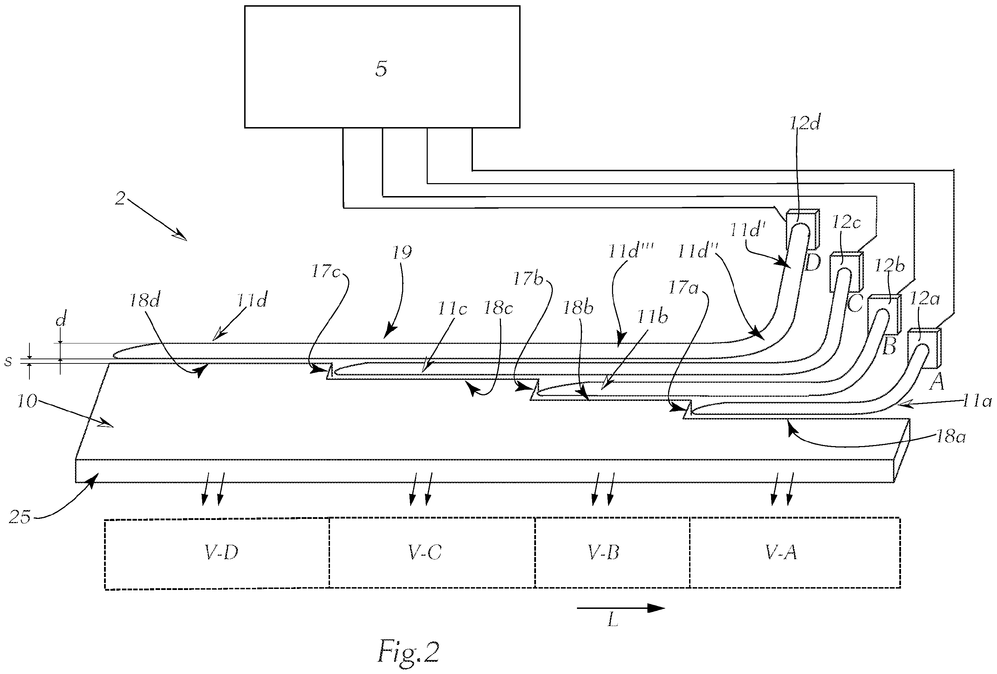

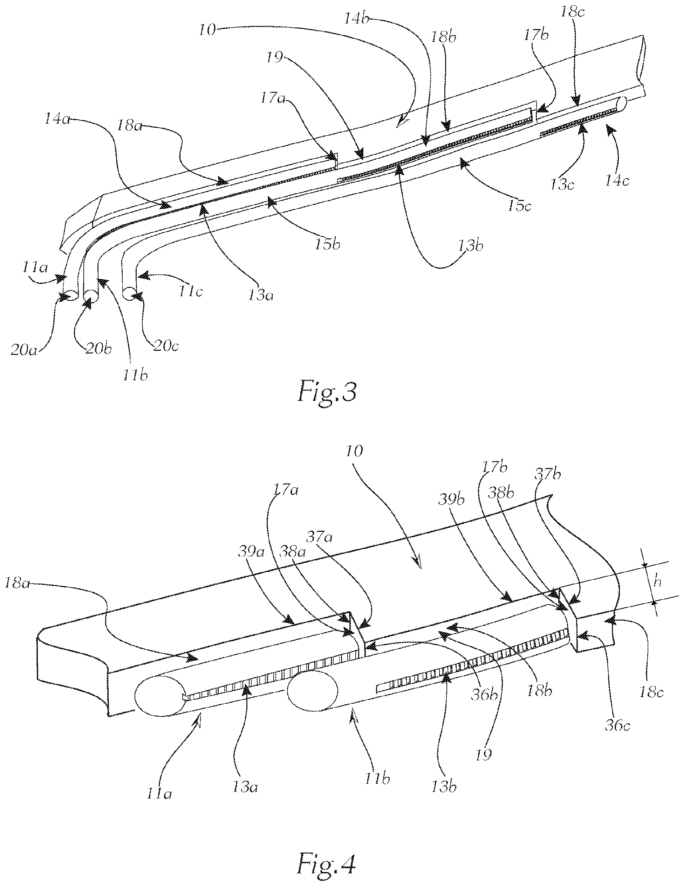

Figur 2 zeigt eine schematische Darstellung einer beispielhaften Ausführungsform eines Lichtsystems 2 gemäß der Erfindung. Darin ist wiederum eine Steuereinheit 5 erkennbar, die mit Lichtquellen 12a bis 12d verbunden ist, denen Lichtleiter 11a bis 11d nachgeordnet sind, sodass die Lichtquellen 12a bis 12d Licht in die Lichtleiter 11a bis 11d einkoppeln. Die Lichtleiter 11a bis 11d sind als Leuchtstäbe ausgebildet, die im gezeigten Ausführungsbeispiel zwei gerade Schenkel 11d' und 11d''' und einen die geraden Schenkel verbindenden gekrümmte Abschnitt 11d'' aufweisen (zur einfacheren Darstellung der Fig. 2 wurde nur der Lichtleiter 11d mit den entsprechenden Bezugszeichen versehen; die verbleibenden Lichtleiter 11a bis 11c sind in analoger Weise geformt). Alternativ dazu könnten die Lichtleiter 11a bis 11d bzw. Leuchtstäbe auch eine beliebige andere Form aufweisen. Die Lichtleiter 11a bis 11 d sind dabei vorzugsweise als Vollkörper ausgeführt, die beispielsweise aus transparentem Polycarbonat bestehen können. Die Schenkel 11d' und 11d''' stehen zueinander in einem Winkel von zumindest 60°. Die Lichtquelle 12d speist in den geraden Schenkel 11d' Licht ein, welches über den gekrümmten Abschnitt 11d'' in den anschließenden geraden Schenkel 11d''' geleitet wird, wo es zu einem Lichtauskopplungsabschnitt 14d (analog dazu 14a bis 14c) gelangt, der in Figur 3 dargestellt ist, und in ein nachgeschaltetes lichtdurchlässiges Abstrahlelement 10 eingeleitet wird. Zu diesem Zweck weist das Abstrahlelement 10 Lichteinkopplungsflächen 18a bis 18d auf, die gemeinsam mit schräg stehenden Stufenflächen 17a bis 17c einen stufenförmigen Lichteinkopplungsabschnitt 19 des Abstrahlelements 10 bilden. Die Schenkel 11d''' (und analog dazu korrespondierende Schenkel der Lichtleiter 11a bis 11c) sind in den Stufen aufgenommen oder liegen an entsprechenden Flächen der Stufen an. Das Abstrahlelement 10 ist dazu eingerichtet, Licht in die Abstrahlrichtung V abzustrahlen, wobei das Licht dabei durch die Lichtaustrittsfläche 25 des Abstrahlelements 10 austritt, sodass kein dunkler Bereich zwischen den durch die einzelnen Lichtquellen 12a bis 12d erzeugten Lichtbildern zu liegen kommt. Ein Lauflichteffekt kann beispielsweise durch aufeinanderfolgende Einschaltung der Lichtquellen 12d bis 12a erzielt werden. Auch können beliebige Übergänge der Leuchtintensität des durch die Lichtquellen 12a bis 12d abgestrahlten Lichtes vorgegeben werden. Natürlich ist es möglich, die Anzahl der Lichtquellen sowie der Lichtleiter beliebig abzuändern, wobei zumindest zwei Lichtquellen und Lichtleiter vorgesehen sein müssen. Vorzugsweise werden die Lichtquellen dabei in einer zeitlichen Reihenfolge angesteuert, mit der ein Lauflichteffekt erzielt werden kann, der von einer Fahrzeuginnenseite zu einer Fahrzeugaußenseite gerichtet ist. Bei der vorliegenden Anordnung entspricht dies einer Reihenfolge, in der zuerst die Lichtquelle 12d, dann 12c, 12b und zuletzt 12a aktiviert wird.

Ein solcherart erzeugtes Lichtbild ist besonders gleichmäßig und weist keine unerwünschten dunklen Bereiche auf. Die Laufrichtung des Lauflichtes wird in Fig. 2 durch einen mit dem Buchstaben L bezeichneten Pfeil angezeigt. Um gesetzlichen Anforderungen bei einem Einsatz an einem Fahrzeug zu entsprechen, kann es vorgesehen sein, dass die Laufrichtung L des Lauflichtes, das durch das Lichtsystem 2 erzeugt wird, von der Fahrzeugmitte zu einem Fahrzeugaußenbereich verläuft, zum Beispiel von einem Fahrzeugkühler/ grill hin zu dem Kotflügel eines Fahrzeuges. Das Abstrahlelement 10 ist in der erfindungsgemäß dargestellten Ausführungsform einstückig ausgeführt und weist eine kontinuierliche Lichtaustrittsfläche 25 auf.

Der Durchmesser d der Leuchtstäbe (siehe Fig. 2) ist dabei geringer als die Höhe h der dazu korrespondierenden Stufe (siehe Fig. 4), die vorzugsweise um zumindest 1mm größer ist als der Durchmesser d. Typische Durchmesser der Lichtleiter 11a bis 11d bzw. der Leuchtstäbe betragen zwischen 6mm und 10mm. Die einzelnen Lichtleitern 11a bis 11d verlaufen vorzugsweise zumindest abschnittsweise im Wesentlichen parallel zueinander, wodurch die den Lichtleitern 11a bis 11d zugeordneten Lichtquellen 12a bis 12d nahe beieinander angeordnet und auf einem gemeinsamen Kühlkörper montiert werden können. Dadurch wird eine kompaktere Bauweise ermöglicht. Zwischen den Lichtleitern 11a bis 11d können in den Figuren nicht dargestellte Blendenelemente angeordnet sein, die lichtundurchlässig sind und dadurch unerwünschte Kopplungen zwischen den Lichtleitern 11a bis 11d verhindern können. Vorzugsweise sind die Lichtauskopplungsabschnitte 14a bis 14d der Lichtleiters 11a bis 11d um einen Abstand s von zumindest 1 mm von einem dazu korrespondierenden Lichteinkopplungsabschnitt 18a bis 18d des Abstrahlelements 10 beabstandet. Anders ausgedrückt, weisen die Lichtleiter 11a bis 11d Bereiche (Lichtauskopplungsabschnitte 14a bis 14d) auf, aus denen durch Umlenkprismen (den Störstellen 13) Licht nach vorne in das Abstrahlelement 10 umgelenkt wird. Außerdem weisen die Lichtleiter 11a bis 11d zur Leitung des Lichts hin zu den Lichtauskopplungsabschnitten 14a bis 14d Bereiche mit vorzugsweise glattem Mantel auf, um möglichst verlustfrei Licht weiterzuleiten.

Figur 3 zeigt eine perspektivische Darstellung eines Ausschnitts des Lichtsystems 2 gemäß der Fig. 2, in welchem nur drei Lichtleiter 11a bis 11c dargestellt sind. Darin sind Lichteintrittsflächen 20a bis 20c der Lichtleiter 11a bis 11c dargestellt, in die die in Figur 3 nicht dargestellten Lichtquellen 12a bis 12c Licht einkoppeln. Diese Lichteintrittsflächen sind nur schematisch und beispielhaft dargestellt und können natürlich anders ausgestaltet sein und sind an die Abstrahlcharakteristik der verwendeten Lichtquellen angepasst, um eine effiziente Nutzung des abgestrahlten Lichtstroms zu gewährleisten. Die Lichtleiter 11a bis 11c weisen jeweils einen Lichtauskopplungsabschnitt 14a bis 14c auf, wobei darin jeweils optische Störstellen bzw. Störstellenelemente 13a bis 13c vorgesehen sind, die beispielsweise als prismenähnliche Vorsprünge oder Vertiefungen ausgeführt sind. Die Störstellen bzw. Störstellenelemente 13a bis 13c (jeder Lichtleiter weist vorzugsweise zumindest einen Lichtauskopplungsabschnitt mit Störstellen auf) sind dazu eingerichtete, Licht in korrespondierende Lichteinkopplungsflächen 18a bis 18c des Abstrahlelements 10 einzukoppeln, wobei durch die Summe der Lichteinkopplungsflächen ein Lichteinkopplungsabschnitt 19 des Abstrahlelements 10 ausgebildet wird. Für die Erfindung ist wesentlich, dass jeder Lichtleiter einen Bereich zum effizienten Weiterleiten des Lichtes aufweist, der frei von Störstellen ist (z.B. durch eine glatte Außenkontur; wie bei Lichtleitfasern) - entsprechend dem "Lichtleitabschnitt" 15. Zudem weist jeder Lichtleiter einen Bereich zum Auskoppeln von Licht auf, nämlich einen "Lichtauskopplungsabschnitt" 14, wobei die Lichtauskopplung mit Hilfe innerhalb des Lichtauskopplungsabschnitts 14 angeordneter Störstellen, z.B. Prismenflächen 13, erfolgt.

Die Lichtleiter-Auskopplungsabschnitte 14a,b,c,d sind den Abstrahlelement-Einstrahlbereichen 18a,b,c,d zugeordnet.

Fig. 4 zeigt eine detaillierte Darstellung einzelner Komponenten des Lichtsystems 2 gemäß der Figur 3. Darin ist die Höhe h einer Stufe des Abstrahlelements 10 erkennbar, die durch die Stufenfläche 17b (bzw. 17a) gebildet wird. Die Stufenflächen 17a bzw. 17b (sowie die weiteren in Fig. 4 nicht dargestellten Stufenflächen) sind durch korrespondierende Kanten 36b, 37a, die der Kante 37a gegenüber liegende Kante (in Fig. 4 nicht sichtbar) sowie durch die Kante 38a bzw. 36c, 37b und 38b usw. eingegrenzt. Die Kanten 36b, 39b (sowie eine zur Kante 39b in dieser Figur nicht dargestellte parallel verlaufende Kante) und 38b grenzen die Lichteinkopplungsfläche 18 b ein (dies gilt für weitere Lichteinkopplungsflächen in analoger Weise).

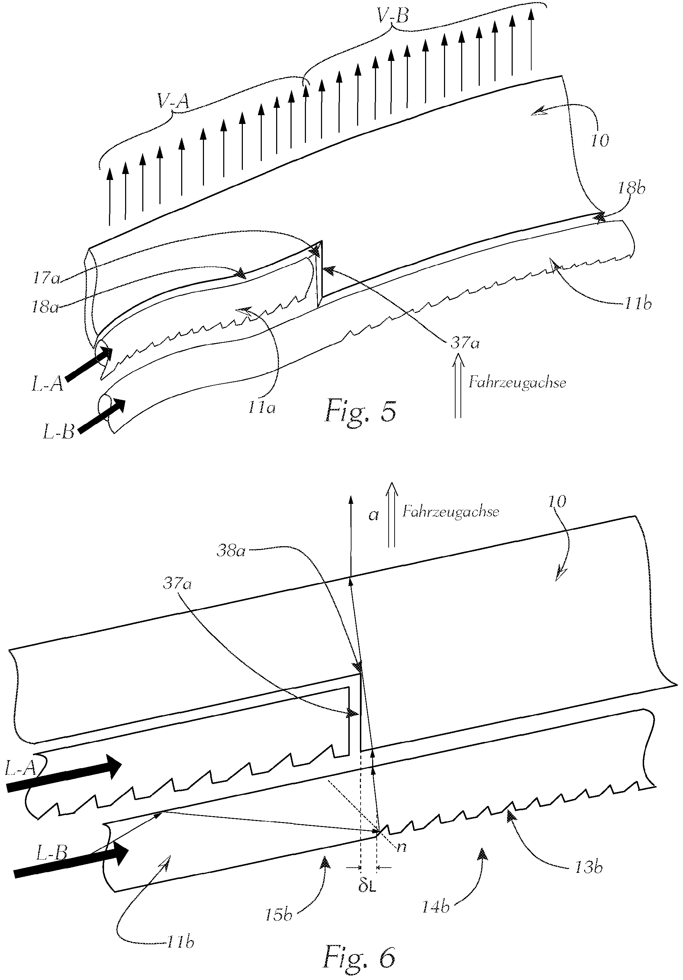

Figur 5 zeigt eine weitere perspektivische Darstellung auf einen Ausschnitt einzelner Komponenten des Lichtsystems 2. Darin ist erkennbar, dass die Stufenfläche 17a bzw. die Kante 37a parallel zu einer Fahrzeugachse orientiert ist, wobei die Fahrzeugachse bei Geradeausfahrt eines Fahrzeugs in Fahrrichtung weist. Dadurch ist es möglich zwischen den Lichtauskopplungsabschnitten 14a bis 14c liegende Bereiche möglichst klein zu halten und dadurch eine homogene Lichtabstrahlung zu erreichen. Die durch das Abstrahlelement 10 bzw. die zugeordneten Lichtleiter 11a und 11b erzeugten Lichtbilder V-A und V-B überlappen, sodass keine dunklen Bereiche zwischen den Lichtbildern V-A und V-B auftreten.

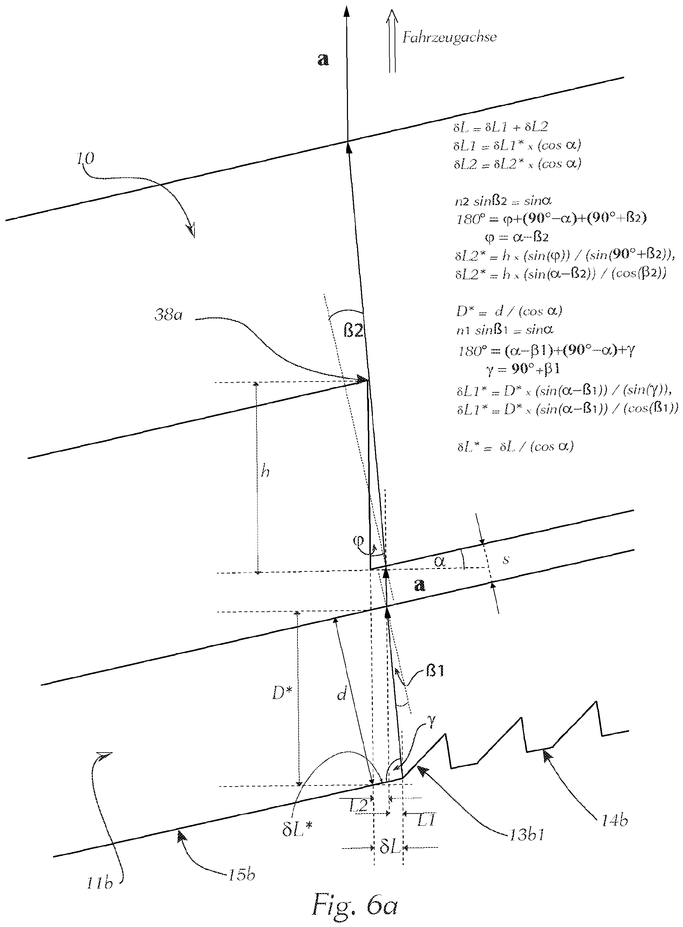

Fig. 6 zeigt in einer Detaildarstellung der Fig. 5 einen beispielhaften Verlauf eines durch den Lichtleiter 11b ein das Abstrahlelement 10 eingekoppelten und von diesem abgestrahlten Lichtstrahls a. Der Lichtstrahl a wird an einer in Fig. 6a genauer dargestellten Störstelle 13b (beispielhaft einer Prismenfläche) an der in Lichtausbreitungsrichtung nächstgelegenen Stelle (also an einer ersten Auskoppel-Störstelle) reflektiert, wobei der Lichtstrahl a bei dem Übergang aus dem Lichtleiter 11b sowie in das Abstrahlelement 10 (sowie bei jedem folgenden Übergang zwischen Medien mit unterschiedlichen Brechungsindex) gebrochen wird. Dadurch wird der Lichtstrahl a seitlich versetzt, wobei der Versatz von den Brechungsindizes der Materialien des Lichtleiters sowie des Abstrahlelements und dem umgebenden Medium (Luft) sowie der Größe des Abstandes s abhängig ist. Der Lichtstrahl a wird durch die Position und Ausgestaltung der Störstelle 13b1 so reflektiert, dass dieser nach Austritt aus dem Lichtleiter 11b in Bezug auf die Fahrzeugachse versetzt und zu dieser parallel orientiert ist, sodass ein vor dem Abstrahlelement 10 abgebildeter, zwischen den Auskopplungsabschnitten 14a und 14b liegender Bereich ebenso mit Lichtstrahlen versorgt und ausgeleuchtet wird. Das Bezugszeichen n bezeichnet dabei eine Normalachse auf eine Prismenfläche einer Störstelle.

Fig. 6a zeigt eine vereinfachte Darstellung des Übergangs des Lichtstrahls a von dem Lichtleiter 11b in das Abstrahlelement 10, in welcher die Lichtbrechung im Übergang zwischen dem Lichtleiter 11b und dem Abstrahlelement 10 vernachlässigt wurde. Eine laterale Verschiebung $\delta L$ entspricht dem Normalabstand der Kante 38a bzw. der Stufenfläche 17a zum einer ersten Störstelle 13b1 des Lichtleiters 11b, sodass der aus dem Lichtleiter 11b austretende Lichtstrahl a an der Kante 38 vorbei gelenkt wird und in den Grenzbereich der Lichtbilder L-A und L-B strahlt.

Ein empfohlener Mindestwert für die laterale Verschiebung $\delta L$ errechnet sich aus folgenden in Fig. 6a gezeigten Parametern:

$\delta L$　　Laterale Verschiebung in (horizontaler) Normalrichtung zur Fahrzeugachse
$\delta L^*$　　Laterale Verschiebung entlang des Lichtleiters
h　　Höhe der Abstufung
d　　Durchmesser des Lichtleiters
s　　Breite des Luftspalts zwischen Lichtleiter und Stufenkörper
$\alpha$　　Verkippung (bei der jeweiligen Abstufung) einer Lichtleiter-Trägerkurve zur Fahrzeugquerrichtung
n　　Brechungsindex der Materialien (n1 für Lichtleiter, n2 für Abstrahlelement)

$$\delta L \ = \delta L1 + \delta L2 = (\delta L1^* + \delta L2^*) \bullet \cos \alpha \ =$$

$$\cos \alpha \bullet \left\{ D^* \bullet ( [\sin (\alpha - \beta_1)] \,/\, [\,\sin \gamma\,] ) + h \bullet ( [\sin \varphi] \,/\, [\,\sin(90° + \beta_2)\,] ) \right\} \ =$$

$$\cos \alpha \bullet \left\{ D^* \bullet ( [\sin (\alpha - \beta_1)] \,/\, [\,\cos(\beta_1)\,] ) + h \bullet ( [\sin (\alpha - \beta_2)] \,/\, [\,\cos(\beta_2)\,] ) \right\}$$

mit

$$\sin \alpha = n_1 \ \sin \beta_1 \qquad \& \qquad \sin \alpha = n_2 \ \sin \beta_2$$

sowie D* = d /cos αFür n1=n2= n (somit $\beta_1 = \beta_2 = \beta$) vereinfacht sich der Ausdruck für die laterale Verschiebung des ersten Störstellenelement13b1

$$\delta L \ = \cos \alpha \bullet ( [\sin (\alpha - \beta)] \,/\, [\,\cos(\beta)\,] ) \left\{ D^* + h \right\}$$

Daraus errechnet sich ein Mindestwert für die laterale Verschiebung $\delta L$ gemäß

$$\delta L^* = \delta L \,/\, (\cos \alpha).$$

Sämtliche der genannten erfindungsgemäßen Ausführungsformen sind kostengünstig und effizient herstellbar und ermöglichen eine kompakte Anordnung der Lichtquellen, die beispielsweise auf einem gemeinsamen Kühlkörper und/oder einer gemeinsamen Platine angeordnet sein können.

In Anbetracht dieser Lehre kann die Erfindung beliebiger dem Fachmann bekannter Weise abgeändert werden und ist daher nicht auf die gezeigten Ausführungsformen beschränkt. Auch können einzelne Aspekte der Erfindung aufgegriffen und miteinander kombiniert werden. Wesentlich sind die der Erfindung zugrunde liegenden Gedanken, die durch einen Fachmann in Kenntnis dieser Beschreibung in mannigfaltiger Weise ausgeführt werden können und trotzdem als solche aufrechterhalten bleiben. Die Erfindung wird nur durch die beigefügten Ansprüche eingeschränkt.

**Patentansprüche**

1. Kraftfahrzeug aufweisend einen Kraftfahrzeugscheinwerfer mit einem Lichtsystem (2), umfassend zumindest zwei Lichtquellen (12a bis 12d), zumindest zwei Lichtleiter (11a bis 11d), zumindest ein nachgeschaltetes lichtdurchlässiges Abstrahlelement (10) und zumindest eine Steuereinheit (5) zum zeitlich versetzten Ansteuern der zumindest zwei Lichtquellen (12a bis 12d), wobei die zumindest zwei Lichtquellen (12a bis 12d) dazu eingerichtet sind, Licht in jeweils einen Lichtleiter (11a bis 11d) einzukoppeln, wobei die Lichtleiter (11a bis 11d) jeweils zumindest einen Lichtauskopplungsabschnitt (14a bis 14c) aufweisen, der dazu eingerichtet ist, Licht in einen Lichteinkopplungsabschnitt (19) des Abstrahlelements (10) einzukoppeln,

   wobei die Lichtleiter (11a bis 11d) jeweils eine Struktur sind, in der einfallendes Licht entlang der Erstreckung des Lichtleiters durch Totalreflexion an den Wänden reflektiert werden kann, wobei die Lichtleiter (11a bis 11d) als Leuchtstäbe (11a bis 11d) ausgebildet sind,
   wobei die Leuchtstäbe (11a bis 11d) optisch wirksame Störstellen (13a bis 13c) aufweisen, die dazu eingerichtet sind, Licht, das sich entlang des Leuchtstabes (11a bis 11d) ausbreitet, dergestalt abzulenken, dass dieses aus dem Leuchtstab (11a bis 11d) durch den Lichtauskopplungsabschnitt (14a bis 14c) austritt und in den Lichteinkopplungsabschnitt (19) des Abstrahlelements (10)
   eintritt, **dadurch gekennzeichnet, dass** das Abstrahlelement (10) Lichteinkopplungsflächen (18a bis 18d) aufweist, die gemeinsam mit schräg stehenden Stufenflächen (17a bis 17c) den Lichteinkopplungsabschnitt (19) des Abstrahlelements (10) stufenförmig ausbilden, wobei jeder Stufe ein Leuchtstab (11a bis 11d) zugeordnet ist und die schräg stehenden Stufenflächen (17a bis 17c) parallel zu einer Fahrzeugachse orientiert sind, wobei die Fahrzeugachse bei Geradeausfahrt eines Fahrzeugs in Fahrrichtung weist, wobei jeder Lichteinkopplungsfläche (18a bis 18d) ein Lichtauskopplungsabschnitt (14a bis 14c) zugeordnet ist, wobei die Störstellen (13a bis 13c) dazu eingerichtet sind, Licht in korrespondierende Lichteinkopplungsflächen (18a bis 18d) des Abstrahlelements (10) einzukoppeln, wobei das Abstrahlelement (10) einstückig ausgeführt ist und eine kontinuierliche Lichtaustrittsfläche (25) aufweist.

2. Kraftfahrzeug nach Anspruch 1, **dadurch gekennzeichnet, dass** die Lichtleiter (11a bis 11d) zwei gerade Schenkel (11d', 11d''') aufweisen, die mittels eines gekrümmten Abschnittes (11d'') miteinander in Verbindung stehen, wobei die geraden Schenkel (11d', 11d''') zueinander einen Winkel von zumindest 60° einschließen.

3. Kraftfahrzeug nach Anspruch 1 oder 2, **dadurch gekennzeichnet, dass** die Anzahl der Lichtleiter (11a bis 11d) die Anzahl der Stufen um den Wert eins übersteigt.

4. Kraftfahrzeug nach einem der Ansprüche 1 bis 3, **dadurch gekennzeichnet, dass** zumindest drei Lichtleiter (11a bis 11d) vorgesehen sind.

5. Kraftfahrzeug nach einem der Ansprüche 1 bis 4, **dadurch gekennzeichnet, dass** die Höhe (h) jeder Stufe größer ist als der Durchmesser (d) eines korrespondierenden Lichtleiters (11a bis 11d).

6. Kraftfahrzeug nach einem der Ansprüche 1 bis 5, **dadurch gekennzeichnet, dass** einzelne Lichtleiter (11a bis 11d) zumindest abschnittsweise im Wesentlichen parallel zueinander verlaufen.

7. Kraftfahrzeug nach einem der Ansprüche 1 bis 6, **dadurch gekennzeichnet, dass** zwischen den Lichtleitern (11a bis 11d) Blendenelemente angeordnet sind.

8. Kraftfahrzeug nach einem der Ansprüche 1 bis 7, **dadurch gekennzeichnet, dass** einzelne Lichtleiter (11a bis 11d) zumindest 1 mm zueinander beabstandet sind.

9. Kraftfahrzeug nach einem der Ansprüche 1 bis 8, **dadurch gekennzeichnet, dass** der Lichtauskopplungsabschnitt (14a bis 14c) des Lichtleiters (11a bis 11d) zumindest 1 mm von dem Lichteinkopplungsabschnitt (19) des Abstrahlelements (10) beabstandet ist.

10. Kraftfahrzeug nach einem der Ansprüche 1 bis 9, wobei die Lichtleiter (11a bis 11d) als Vollkörper ausgeführt sind.

**Claims**

1. Motor vehicle having a motor vehicle headlamp with a light system (2), comprising at least two light sources (12a to 12d), at least two light guides (11a to 11d), at least one downstream light-transmitting radiating element (10) and at least one control unit (5) for time-delayed actuation of the at least two light sources (12a to 12d), wherein the at least two light sources (12a to 12d) are arranged to couple light into a respective light guide (11a to 11d), wherein the light guides (11a to 11d) each have at least one light decoupling section (14a to 14c) which is arranged to couple light into a light coupling section (19) of the radiating element (10),

   wherein the light guides (11a to 11d) are each a structure in which incident light can be reflected along the extension of the light guide by total reflection at the walls,
   wherein the light guides (11a to 11d) are designed as light rods (11a to 11d),
   wherein the light rods have optically effective interference points (13a to 13c) which are arranged to deflect light propagating along the light rod (11a to 11d) in such a way that it emerges from the light rod (11a to 11d) through the light decoupling section (14a to 14c) and enters the light coupling section (19) of the radiating element (10),
   **characterized in that** the radiating element (10) has light coupling surfaces (18a to 18d) which, together with inclined step surfaces (17a to 17c), form the light coupling section (19) of the radiating element (10) in a stepped manner, wherein a light rod (11a to 11d) is associated with each step and the inclined step surfaces (17a to 17c) are oriented parallel to a vehicle axis, wherein the vehicle axis points in the direction of travel when a vehicle is traveling in a straight line, wherein a light decoupling section (14a to 14c) is associated with each light coupling surface (18a to 18d), wherein the interference points (13a to 13c) are arranged to couple light into corresponding light coupling surfaces (18a to 18d) of the radiating element (10), wherein the radiating element (10) is designed in one piece and has a continuous light emission surface (25).

2. Motor vehicle according to claim 1, **characterized in that** the light guides (11a to 11d) have two straight legs (11d', 11d‴) which are connected to one another by means of a curved section (11d"), the straight legs (11d', 11d‴) forming an angle of at least 60° to one another.

3. Motor vehicle according to claim 1 or 2, **characterized in that** the number of light guides (11a to 11d) exceeds the number of steps by the value one.

4. Motor vehicle according to one of claims 1 to 3, **characterized in that** at least three light guides (11a to 11d) are provided.

5. Motor vehicle according to one of claims 1 to 4, **characterized in that** the height (h) of each step is greater than the diameter (d) of a corresponding light guide (11a to 11d).

6. Motor vehicle according to one of claims 1 to 5, **characterized in that** individual light guides (11a to 11d) run essentially parallel to one another, at least in sections.

7. Motor vehicle according to one of claims 1 to 6, **characterized in that** diaphragm elements are arranged between the light guides (11a to 11d).

8. Motor vehicle according to one of claims 1 to 7, **characterized in that** individual light guides (11a to 11d) are spaced at least 1 mm apart.

9. Motor vehicle according to one of claims 1 to 8, **characterized in that** the light decoupling section (14a to 14c) of the light guide (11a to 11d) is spaced at least 1 mm from the light coupling section (19) of the radiating element (10).

10. Motor vehicle according to one of claims 1 to 9, wherein the light guides (11a to 11d) are designed as solid bodies.

**Revendications**

1. Véhicule automobile présentant un phare de véhicule automobile avec un système lumineux (2), comprenant au moins deux sources lumineuses (12a à 12d), au moins deux guides de lumière (11a à 11d), au moins un élément rayonnant (10) transparent à la lumière monté en aval et au moins une unité de commande (5) pour commander de manière décalée dans le temps les au moins deux sources lumineuses (12a à 12d), les au moins deux sources lumineuses (12a à 12d) étant adaptées pour coupler la lumière dans un guide de lumière respectif (11a à 11d), les guides de lumière (11a à 11d) présentant chacun au moins une section de découplage de lumière (14a à 14c) adaptée pour coupler la lumière dans une section de couplage de lumière (19) de l'élément rayonnant (10),

   les guides de lumière (11a à 11d) étant chacun une structure dans laquelle la lumière incidente peut être réfléchie par réflexion totale sur les parois le long de l'étendue du guide de lumière,
   les guides de lumière (11a à 11d) étant conçus comme des barres lumineuses (11a à 11d),
   les barres lumineuses présentant des points de perturbation optiquement efficaces (13a à 13c) qui sont adaptés à cet effet, dévier la lumière qui se propage le long de la barre lumineuse (11a à 11d) de telle sorte qu'elle sorte de la barre lumineuse (11a à 11d) à travers la section de découplage de la lumière (14a à 14c) et entre dans la section de couplage de la lumière (19) de l'élément rayonnant (10),
   **caractérisé en ce que** l'élément rayonnant (10) présente des surfaces de couplage de la lumière (18a à 18d) qui, conjointement avec des surfaces de gradins inclinées (17a à 17c), forment la section de couplage de la lumière (19) de l'élément rayonnant (10) en forme de gradins, une barre lumineuse (11a à 11d) étant associée à chaque marche et les surfaces de marche inclinées (17a à 17c) étant orientées parallèlement à un axe du véhicule, l'axe du véhicule étant orienté dans le sens de la marche lorsqu'un véhicule sort en ligne droite, une section de découplage de lumière (14a à 14c) étant associée à chaque surface de couplage de lumière (18a à 18d), les zones de perturbation (13a à 13c) étant adaptées pour injecter de la lumière dans des surfaces de couplage de la lumière correspondantes (18a à 18d) de l'élément rayonnant (10), l'élément rayonnant (10) étant réalisé d'une seule pièce et présentant une surface de sortie de lumière continue (25).

2. Véhicule automobile selon la revendication 1, **caractérisé en ce que** les guides de lumière (11a à 11d) comportent deux branches droites (11d', 11d‴) reliées entre elles par une portion courbe (11d"), les branches droites (11d', 11d‴) faisant entre elles un angle d'au moins 60°.

3. Véhicule automobile selon la revendication 1 ou 2, **caractérisé en ce que** le nombre de guides de lumière (11a à 11d) dépasse le nombre de marches de la valeur un.

4. Véhicule automobile selon l'une des revendications 1 à 3, **caractérisé en ce qu'**il est prévu au moins trois guides de lumière (11a à 11d).

5. Véhicule automobile selon l'une des revendications 1 à 4, **caractérisé en ce que** la hauteur (h) de chaque étage est supérieure au diamètre (d) d'un guide de lumière (11a à 11d) correspondant.

6. Véhicule automobile selon l'une des revendications 1 à 5, **caractérisé en ce que** les différents guides de lumière (11a à 11d) sont sensiblement parallèles entre eux, au moins par tronçons.

7. Véhicule automobile selon l'une des revendications 1 à 6, **caractérisé en ce que** des éléments de masquage sont disposés entre les guides de lumière (11a à 11d).

8. Véhicule automobile selon l'une des revendications 1 à 7, **caractérisé en ce que** les différents guides de lumière (11a à 11d) sont espacés les uns des autres d'au moins 1 mm.

9. Véhicule automobile selon l'une des revendications 1 à 8, **caractérisé en ce que** la portion de découplage de lumière (14a à 14c) du guide de lumière (11a à 11d) est espacée d'au moins 1 mm de la section de couplage de lumière (19) de l'élément rayonnant (10).

10. Véhicule automobile selon l'une des revendications 1 à 9, dans lequel les guides de lumière (11a à 11d) sont réalisés sous forme de corps pleins.

*Fig.1*

Fig.2

Fig.3

Fig.4

V-A

V-B

10

18b

17a

18a

37a

L-A

L-B

Fahrzeugachse

11a

11b

*Fig. 5*

a   Fahrzeugachse

10

38a

37a

L-A

n

L-B

δL

15b

14b

13b

11b

*Fig. 6*

$\delta L = \delta L1 + \delta L2$
$\delta L1 = \delta L1^* \times (\cos \alpha)$
$\delta L2 = \delta L2^* \times (\cos \alpha)$

$n2 \; \sin\beta2 = \sin\alpha$
$180° = \varphi + (90° - \alpha) + (90° + \beta2)$
$\varphi = \alpha - \beta2$
$\delta L2^* = h \times (\sin(\varphi)) / (\sin(90° + \beta2))$,
$\delta L2^* = h \times (\sin(\alpha - \beta2)) / (\cos(\beta2))$

$D^* = d / (\cos \alpha)$
$n1 \; \sin\beta1 = \sin\alpha$
$180° = (\alpha - \beta1) + (90° - \alpha) + \gamma$
$\gamma = 90° + \beta1$
$\delta L1^* = D^* \times (\sin(\alpha - \beta1)) / (\sin(\gamma))$,
$\delta L1^* = D^* \times (\sin(\alpha - \beta1)) / (\cos(\beta1))$

$\delta L^* = \delta L / (\cos \alpha)$

Fig. 6a

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013120124 A2
- DE 1012014205996 A1
- US 4208363 A
- US 5001306 A
- US 5184883 A